# EUROPEAN PATENT APPLICATION

(11) **EP 4 800 788 A1**
(43) Date of publication of application: **02.09.2026**
(21) Application number: 26160359.1
(22) Date of filing: 24.02.2026
(51) Int. Cl.: H01M 10/04, H01M 10/613, H01M 10/647, H01M 10/6567, H01M 50/209

(54) **SECONDARY BATTERY, SECONDARY BATTERY MODULE, AND METHOD FOR MANUFACTURING SECONDARY BATTERY MODULE**

(30) Priority: 26.02.2025 KR 20250025345
(71) Applicant: SAMSUNG SDI CO., LTD., Yongin-si, Gyeonggi-do 17084 (KR)
(72) Inventor: Lee, Kanghee, 17084 Yongin-si, Gyeonggi-do (KR)
(74) Representative: Meissner Bolte Partnerschaft mbB

(57) **Abstract**

The invention relates to a secondary battery (100), a secondary battery module (200), and a method for manufacturing the secondary battery module (200). The secondary battery (100) includes an electrode assembly (110) including a positive electrode and a negative electrode, a case (120) configured to accommodate the electrode assembly (110), and a bending portion (130) formed on a bottom portion of the case (120).

## Description

### BACKGROUND

### 1. Technical Field

The present invention relates to a secondary battery, a secondary battery module, and a method for manufacturing the secondary battery module, for the purpose of improving thermal management and structural stability of a secondary battery.

### 2. Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage.

Recently, as the use of a large-capacity secondary battery increases in power-driven vehicles including hybrid vehicles and electric vehicles, the importance of heat generation and internal pressure management due to high voltage and high current is highlighted.

A general prismatic battery has a rectangular parallelepiped structure, and heat is dissipated through a cooling plate at the bottom of the prismatic battery. However, as the use of large-capacity batteries increases, the related art has a problem in that effective heat management and pressure distribution are difficult.

In particular, when internal pressure increases, cracks may occur at a case welding portion, and a contact area with the cooling plate is limited and heat dissipation performance may be reduced.

The above information disclosed in this Background section is for enhancement of understanding of the background of the present invention, and therefore, it may contain information that does not constitute related (or prior) art.

### SUMMARY

An object of the present invention is to provide a secondary battery for improving cooling performance and distributing internal pressure by forming a bending portion at a bottom portion of a case.

In addition, an object of the present invention is to provide a secondary battery module that improves cooling efficiency by increasing a contact area with a cooling plate through a bending portion.

However, the technical problem to be solved by the present invention is not limited to the above problem, and other problems not mentioned herein, and aspects and features of the present invention that would address such problems, will be clearly understood by those skilled in the art from the description of the present invention below.

A secondary battery according to the present invention includes: an electrode assembly including a positive electrode and a negative electrode; a case configured to accommodate the electrode assembly; and a bending portion formed on a bottom portion of the case.

In embodiments, the bending portion may be formed in a concave curved shape in an inward direction of the case.

In embodiments, the bending portion may be formed in a symmetrical shape based on a center line of the bottom portion of the case.

In embodiments, the bending portion may include a plurality of bending regions, and the bending regions may be continuously arranged at regular intervals along the bottom portion of the case.

In embodiments, the bending regions may have the same radius of curvature, and may be formed in a uniform pattern along the bottom portion of the case.

A secondary battery module according to the present invention includes: a secondary battery including an electrode assembly including a positive electrode and a negative electrode, a case configured to accommodate the electrode assembly, and a bending portion formed on a bottom portion of the case; and a cooling plate configured to come into contact with the bending portion of the secondary battery.

In embodiments, the cooling plate may have a radius of curvature equal to a radius of curvature of the bending portion, and may be formed to be in close contact with the bending portion.

In embodiments, the cooling plate may be provided therein with a fluid path through which a cooling fluid flows, and the fluid path may be continuously formed along the bending portion.

In embodiments, the cooling plate may include a groove having a shape corresponding to the bending portion, and a protrusion of the bending portion may be inserted into the groove and coupled thereto.

In embodiments, the fluid path of the cooling plate may be formed so that a radius of an inlet gradually decreases and a radius of an outlet gradually increases in order to convert flow of the cooling fluid into turbulence flow.

In embodiments, diameters of the inlet and the outlet may be formed depending on a height of the protrusion of the bending portion.

In embodiments, a plurality of ripples may be formed on a sidewall of the fluid path of the cooling plate to disturb a flow of the cooling fluid and form turbulence flow.

In embodiments, the ripples may be arranged in a triangular shape to be perpendicular to a flow direction of the cooling fluid, and may be crosswise arranged on upper and lower sidewalls of the fluid path of the cooling plate.

In embodiments, the cooling plate may include a multi-stage fluid path structure of connecting an inlet and an outlet of the cooling fluid, and the multi-stage fluid path structure may change a flow of the cooling fluid in a stepwise manner.

A method for manufacturing the secondary battery module according to the present invention includes: preparing an electrode assembly including a positive electrode and a negative electrode; molding a case that accommodates the electrode assembly; forming a bending portion at a bottom portion of the case; allowing a cooling plate to come into contact with the bending portion to couple the cooling plate to the bending portion; and forming a fluid path for cooling fluid inside the cooling plate.

In embodiments, the forming of the bending portion may include a press processing or deep drawing process of maintaining a radius of curvature of the bending portion constant.

In embodiments, in the forming of the bending portion, the protrusion may be formed, and in the allowing of the cooling plate to come into contact with the bending portion to couple the cooling plate to the bending portion, a groove corresponding to the protrusion may be formed in the cooling plate and the protrusion may be inserted into the groove, so that the cooling plate may come into contact with the bending portion to be coupled to the bending portion.

In embodiments, the forming of the fluid path inside the cooling plate may include gradually decreasing a diameter of an inlet and gradually increasing a diameter of an outlet.

In embodiments, the method may further include forming a plurality of ripples on a sidewall of the fluid path inside the cooling plate.

In embodiments, the ripples may be processed into a triangular shape to be perpendicular to a flow direction of the cooling fluid, and the method may further include forming the ripples to be crosswise arranged on upper and lower sidewalls of the fluid path of the cooling plate.

According to embodiments of the present invention, a contact area with a cooling plate is increased by forming a bending portion at a bottom portion of a case of a secondary battery, so that cooling efficiency can be improved.

In addition, the bending portion according to embodiments of the present invention can provide structural stability that effectively distributes internal pressure and external impact. As the bending shape is applied, deformation due to thermal expansion occurring in a battery can be alleviated, and a battery cell can be protected from external impact.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present invention, and further describe aspects of the present invention together with the detailed description of the present invention. Thus, the present invention should not be construed as being limited to the drawings:
FIG. 1 is a top perspective view of a prismatic secondary battery;
FIG. 2 is a cross-sectional view taken along line I-I in FIG. 1;
FIG. 3 is a schematic view illustrating a secondary battery according to embodiments of the present invention;
FIG. 4 is a schematic view illustrating a secondary battery according to other embodiments of the present invention;
FIGS. 5 to 8 are schematic views illustrating a secondary battery module according to embodiments of the present invention;
FIG. 9 is a flowchart for explaining a method for manufacturing the secondary battery module according to embodiments of the present invention;
FIG. 10 is an exemplary view of a secondary battery module in which secondary batteries according to embodiments of the present invention are arranged;
FIG. 11 is an exemplary view of a secondary battery pack including the secondary battery module illustrated in FIG. 10; and
FIG. 12 is a conceptual view of a vehicle including the secondary battery pack illustrated in FIG. 11.

### DETAILED DESCRIPTION

Exemplary embodiments of the present invention will be described below in detail with reference to the accompanying drawings. Prior to the description, it is noted that the terms or words used in this specification and claims should not be construed as being limited to common or dictionary meanings but instead should be understood to have meanings and concepts in agreement with the spirit of the present invention based on the principle that an inventor can define the concept of each term suitably in order to describe his/her own invention in the best way possible. Accordingly, since the embodiments described in this specification and the configurations illustrated in the drawings are only an example of the present invention and they do not cover all the technical ideas of the present invention, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present invention, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present invention relates to "one or more embodiments of the present invention". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below" "lower" "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present invention and is not intended to limit the present invention.

The present invention will be described in detail with reference to the attached drawings.

Examples of secondary batteries include a coin type, a cylindrical type, a prismatic type, and a pouch type. The present invention is basically applicable to a prismatic secondary battery. Therefore, the prismatic secondary battery will first be briefly described prior to description of embodiments of the present invention.

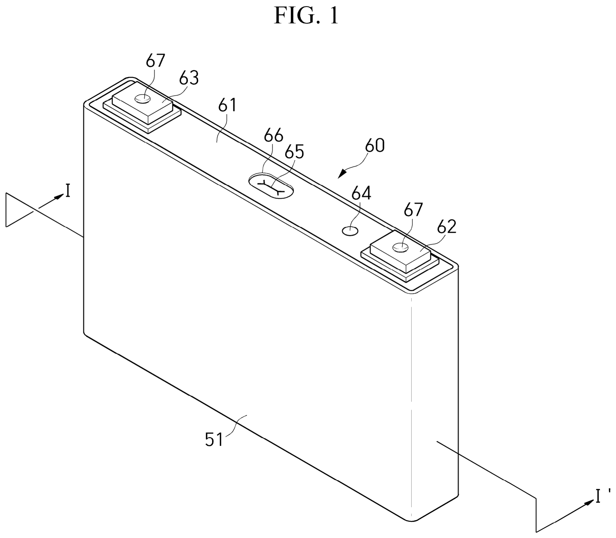

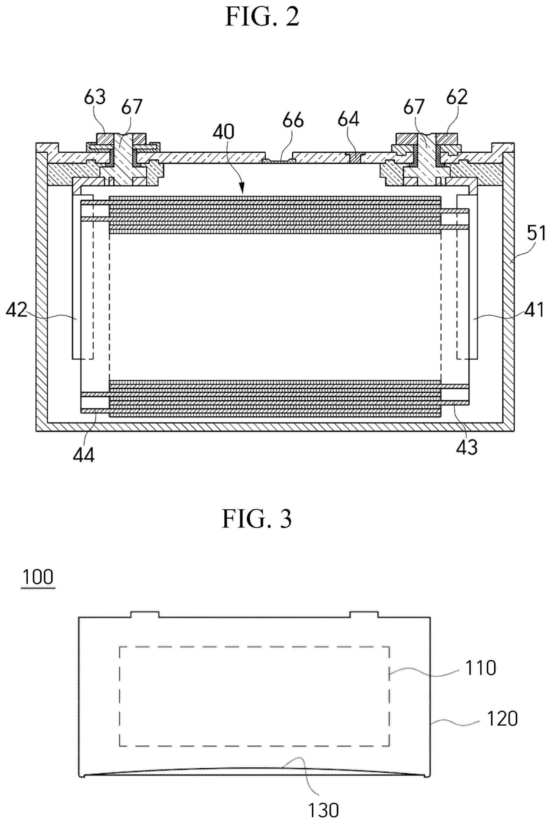

FIG. 1 is a top perspective view of the prismatic secondary battery. FIG. 2 is a cross-sectional view taken along line I-I' of FIG. 1.

First, the external appearance of the prismatic secondary battery illustrated in FIG. 1 will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 2, the internal structure of the prismatic secondary battery and the coupling structure with the cap assembly 60 will be described.

As illustrated in FIG. 2, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present invention. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies is not limited in the present invention. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1, through terminal pins 67, respectively. In some embodiments, the terminal pins 67 may each have an outer peripheral surface that is threaded, and may be fastened to the first terminal 62 and the second terminal 63 by screwing. However, the present invention is not limited thereto. For example, the terminal pins 67 may also be coupled to the first terminal 62 and the second terminal 63 by riveting or welding.

FIG. 3 is a schematic view illustrating a secondary battery according to embodiments of the present invention.

Referring to FIG. 3, a secondary battery 100 according to embodiments of the present invention may include an electrode assembly 110 including a positive electrode and a negative electrode, a case 120 that accommodates the electrode assembly 110, and a bending portion 130 formed on a bottom portion of the case 120.

The electrode assembly 110 including the positive electrode and the negative electrode according to embodiments of the present invention stores and releases electric energy, the positive electrode and the negative electrode each include an active material, and the active material enables charging and discharging through an electrochemical reaction.

The positive electrode and the negative electrode each include a conductive material and a binder and are formed to secure electrical characteristics and structural stability, and a separator is interposed between the positive electrode and the negative electrode to prevent a short circuit. The electrode assembly 110 may be implemented in shapes such as a stacked type, a winding type, and a mixed type, and in a specific embodiment, a plurality of electrode assemblies 110 may be arranged in series or in parallel to adjust the overall output and capacity.

The case 120 that accommodates the electrode assembly 110 according to embodiments of the present invention is an external protective structure of the secondary battery 100, and protects the internal electrode assembly 110 from physical impact, environmental factors, and external pressure.

The case 120 may be made of a metal material or a polymer composite material, and is manufactured to have high strength and high heat resistance characteristics. In embodiments, aluminum, stainless steel, or a high strength composite material may be used. The case 120 may include a case body and a cap plate that covers an opening of the case. The case 120 accommodates an electrolyte together with the electrode assembly 110, and is implemented with a structure of sealing an internal space to maintain airtightness thereof.

The bending portion 130 formed on the bottom portion of the case 120 according to embodiments of the present invention is for improving cooling performance and distributing internal pressure. The bending portion 130 may be formed in an inwardly concave curved shape on the bottom portion of the case 120, thereby increasing a contact area with a cooling plate 220 and optimizing heat dissipation. The bending portion 130 may be arranged at regular intervals, and in embodiments, a plurality of bending regions may be formed to maintain the same radius of curvature.

The bending portion 130 according to embodiments of the present invention may be formed in a concave curved shape in the inward direction of the case 120.

The inward direction refers to a direction toward the inside of the battery case 120, and the bending portion 130 is formed in a curved shape that is recessed into the inside of the case 120 rather than protruding outward. That is, the concave curved shape refers to a structure in which the bending portion 130 has a gentle curvature and is recessed into the inside of the case 120, which may contribute to pressure distribution inside the battery and cooling performance improvement. Since the bending portion 130 has a concave shape, the contact area between the bottom portion of the case 120 and the cooling plate 220 increases, thereby improving the cooling efficiency.

In embodiments, the bending portion 130 may be formed in a semicircular or oval concave curved shape. In this case, the radius of curvature of the bending portion 130 may be maintained constant, and pressure generated inside the case 120 may be effectively distributed.

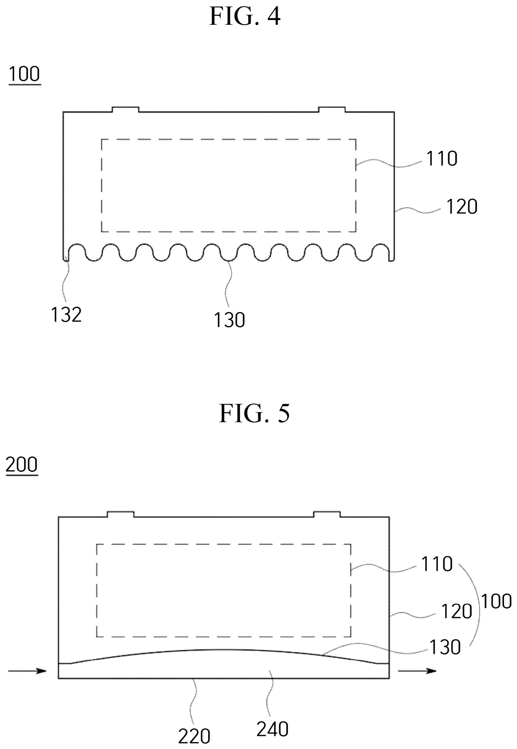

In other embodiments, as illustrated in FIG. 4, the bending portion 130 may be formed in a continuous wave structure. This structure may further increase the contact area with the cooling plate 220, thereby further improving heat dissipation performance.

In a specific embodiment, the bending portion 130 may be arranged in a plurality of concave curved shapes arranged at regular intervals, which may contribute to maintaining a uniform temperature distribution inside the battery.

Accordingly, the structure of the bending portion 130 having a concave curved shape in the inward direction of the case 120 according to the embodiments of the present invention effectively distributes pressure inside the battery to improve mechanical stability, and increases the contact area between the bottom portion of the case 120 and the cooling plate 220 to improve heat dissipation performance.

The bending portion 130 according to embodiments of the present invention may also be formed in a symmetrical shape based on the center line of the bottom portion of the case 120.

The center line refers to a virtual line that bisects the bottom portion of the case 120 in a longitudinal direction or a transverse direction, and the bending portion 130 has a bilaterally or vertically symmetrical shape based on this center line. This allows the bending portion 130 to uniformly distribute pressure inside a battery cell, and contributes to optimizing the contact area with the cooling plate 220.

In embodiments, an oval bending portion 130 that is bilaterally symmetrical based on the center line of the bottom portion of the case 120 may be formed. In this case, the bending portion 130 may have the same radius of curvature and provide a uniform pressure distribution effect across the entire bottom portion of the case 120.

Therefore, the symmetrical formation structure of the bending portion 130 according to embodiments of the present invention based on the center line provides an effect of optimizing the distribution of pressure generated inside the battery, improving structural stability, and uniformly maintaining cooling performance.

The bending portion 130 according to embodiments of the present invention may include a plurality of bending regions, and the bending regions may be continuously arranged at regular intervals along the bottom portion of the case 120.

The plurality of bending regions may be formed in a linear arrangement, a lattice arrangement, or a specific pattern, and a gap between the bending regions and a size of each bending region may be adjusted according to the usage environment of the battery and heat dissipation performance requirements.

In embodiments, bending regions having the same size may be continuously arranged at equal intervals along the bottom portion of the case 120. In other embodiments, the bending regions may be crosswise arranged to further increase the contact area with the cooling plate 220.

Accordingly, a structure including a plurality of bending regions according to embodiments of the present invention may improve the heat dissipation performance of the bottom portion of the battery case 120, and may further improve heat dissipation efficiency by uniformly distributing contact with the cooling plate 220.

Bending regions according to embodiments of the present invention may have the same radius of curvature, and may be formed in a uniform pattern along the bottom portion of the case 120.

In embodiments, semicircular bending regions having the same radius of curvature may be continuously arranged along the bottom portion of the case 120. In other embodiments, the bending region may be formed in a polygonal shape, and each bending portion 130 may be arranged while maintaining the same size and pattern.

Accordingly, the bending region structure having the same radius of curvature and formed in a uniform pattern according to embodiments of the present invention may improve the thermal management performance of the battery case 120 and uniformly maintain a mechanical stress distribution, thereby increasing durability.

In this way, the secondary battery 100 according to embodiments of the present invention includes the bending portion 130, so that the contact area with the cooling plate 220 may be increased to improve cooling performance, and internal pressure and external impact may be effectively distributed to improve the stability of the battery.

FIGS. 5 to 7 are schematic views illustrating a secondary battery module 200 according to embodiments of the present invention.

As illustrated in the drawings, the secondary battery module 200 according to embodiments of the present invention includes a secondary battery 100 including an electrode assembly 110 including a positive electrode and a negative electrode, a case 120 that accommodates the electrode assembly 110, and a bending portion 130 formed on the bottom portion of the case 120, and a cooling plate 220 that comes into contact with the bending portion 130 of the secondary battery 100.

The electrode assembly 110 including the positive electrode and the negative electrode according to embodiments of the present invention stores and releases electric energy, the positive electrode and the negative electrode each include an active material, and the active material enables charging and discharging through an electrochemical reaction.

The case 120 that accommodates the electrode assembly 110 according to embodiments of the present invention is an external protective structure of the secondary battery 100, and protects the internal electrode assembly 110 from physical impact, environmental factors, and external pressure. The case 120 may include a case body and a cap plate that covers an opening of the case. The case 120 accommodates an electrolyte together with the electrode assembly 110, and is implemented with a structure of sealing an internal space to maintain airtightness thereof.

The bending portion 130 formed on the bottom portion of the case 120 according to embodiments of the present invention is for improving cooling performance and distributing internal pressure. The bending portion 130 may be formed in an inwardly concave curved shape on the bottom portion of the case 120, thereby increasing a contact area with a cooling plate 220 and optimizing heat dissipation. The bending portion 130 may be arranged at regular intervals, and in embodiments, a plurality of bending regions may be designed to maintain the same radius of curvature.

The cooling plate 220 according to embodiments of the present invention effectively dissipates heat generated from a battery by directly contacting the bending portion 130 of the secondary battery 100. The cooling plate 220 may include a fluid path 240 through which cooling fluid flows, and is designed to optimize cooling performance by quickly transferring the heat of the battery.

The cooling plate 220 may be made of an aluminum alloy or copper (Cu) having high thermal conductivity.

In addition, the cooling plate 220 may include a high thermally conductive silicone pad or a thermally conductive adhesive in a portion that comes into contact with the battery bending portion 130, thereby reducing contact resistance and maximizing heat transfer efficiency.

In a specific embodiment, the cooling plate 220 may be provided therein with a structure in which cooling fluid flows, and a water-ethylene glycol mixture, silicone oil, or an electrically insulated coolant may be used as the cooling fluid. This prevents overheating of the battery and enables stable heat management for a long period of time.

In addition, in a specific embodiment, the cooling plate 220 may be formed to match the shape of the bending portion 130 to maximize a contact area with the bending portion 130. Accordingly, heat transfer may be uniformly performed, and cooling uniformity of the entire battery module may be maintained.

Accordingly, the secondary battery module 200 according to embodiments of the present invention may effectively release heat generated from the battery and maintain temperature uniformity of the battery by including the cooling plate 220 that comes into contact with the bending portion 130 of the battery.

According to embodiments of the present invention, the cooling plate 220 may have the same radius of curvature as that of the bending portion 130 and may be formed to be in close contact with the bending portion 130.

In embodiments, the radius of curvature of the bending portion 130 is set within a range of 2 mm to 15 mm, and the cooling plate 220 is also processed to maintain the same radius of curvature. When the radius of curvature of the bending portion 130 and the radius of curvature of the cooling plate 220 do not coincide with each other, since fine gaps may occur between the two components, thermal contact resistance may be increased and cooling efficiency may be reduced. Therefore, in the present invention, it is important to maintain the radius of curvature of the cooling plate 220 and the radius of curvature of the bending portion 130 to be the same.

The cooling plate 220 is formed to be in close contact with the bending portion 130, thereby optimizing cooling performance. In order to ensure the close contact, the surface of the cooling plate 220 may additionally include a high thermally conductive silicone pad or a thermally conductive adhesive, thereby minimizing contact resistance between the cooling plate 220 and the bending portion 130.

In addition, in a specific embodiment, an inner surface of the cooling plate 220 may be processed with a micro-structure pattern to increase a contact area and further improve heat transfer efficiency. Such a close contact structure allows heat to be effectively distributed during operation of the battery module and prevents local overheating of a battery cell.

In order to increase the degree of close contact between the cooling plate 220 and the bending portion 130, a specific embodiment may adopt a method in which the cooling plate 220 is mounted in a press-fitting manner or is fastened through a precisely machined clamping structure. Accordingly, the cooling plate 220 may be stably coupled to the bending portion 130 and the contact state may be maintained even when used for a long time.

For example, the cooling plate 220 is made of aluminum alloy or copper (Cu), and is processed to have the same radius of curvature as that of the bending portion 130 through a CNC milling or deep drawing process.

In addition, when the fluid path 240 through which cooling fluid flows is formed inside the cooling plate 220, the fluid path 240 may also be manufactured in a curved shape to match the bending portion 130. Through such a structure, the cooling fluid may efficiently receive heat while in close contact with the bending portion 130 of the battery, and cooling performance may be further improved.

In a specific embodiment, a thermally conductive adhesive may be applied to a surface where the cooling plate 220 comes into contact with the battery bending portion 130 to further improve the degree of close contact and eliminate fine gaps. Accordingly, a contact area between the cooling plate 220 and the bending portion 130 may be further improved, and cooling efficiency may be improved.

The cooling plate 220 according to embodiments of the present invention is provided therein with the fluid path 240 through which cooling fluid flows, and the fluid path 240 may be continuously formed along the bending portion 130.

The cross-sectional shape of the fluid path 240 may be formed as a rectangular, circular, or oval shape, and in a specific embodiment, an inner surface of the fluid path 240 may be processed into a microstructure to improve heat exchange performance.

Cooling fluid circulates through the fluid path 240 inside the cooling plate 220, absorbs heat from the secondary battery 100, and then discharges the heat to the outside to release the heat. The cooling fluid may be composed of a water-ethylene glycol mixture, an oil-based coolant, or a carbon dioxide coolant, and in a specific embodiment, heat dissipation performance may be maximized using cooling fluid with high thermal conductivity.

The cooling fluid may flow continuously along the fluid path 240, and the fluid path 240 may be formed in the same shape as that of the bending portion 130 so that a contact area with the bending portion 130 may be maximized. Accordingly, heat generated on the surface of the battery may be quickly transferred to the cooling fluid, and the temperature distribution inside the battery may be uniformly maintained.

The fluid path 240 may be connected to an external cooling system, and in a specific embodiment, the flow of the cooling fluid may be controlled using a pump. In addition, the fluid path 240 inside the cooling plate 220 may be designed to allow the fluid to rotate at a specific point to form turbulence flow and further improve heat exchange performance.

According to embodiments, the cooling plate 220 is made of aluminum alloy or stainless steel, and the internal fluid path 240 is formed through a CNC milling process or an extrusion molding process. The fluid path 240 has the same radius of curvature as that of the bending portion 130, thereby maximizing a heat exchange area between the battery and the cooling plate 220.

In addition, the inner surface of the fluid path 240 of the cooling plate 220 may be smoothly processed to facilitate the flow of the fluid, and in a specific embodiment, the inside of the fluid path 240 may be coated to prevent corrosion and further fluid flow resistance.

The cooling fluid circulates through a pump system connected to an external cooling device and continuously flows along the fluid path 240 inside the cooling plate 220. In a specific embodiment, the battery temperature may be precisely controlled by adjusting the flow rate of the cooling fluid.

Accordingly, the secondary battery module 200 according to embodiments of the present invention includes the fluid path 240, through which cooling fluid flows, inside the cooling plate 220, and the fluid path 240 is continuously formed along the bending portion 130, so that heat exchange efficiency between the battery and the cooling fluid may be further increased.

The cooling plate 220 according to embodiments of the present invention may include a groove 260 having a shape corresponding to the bending portion 130, and a protrusion 132 of the bending portion 130 may be inserted into the groove 260 and coupled thereto.

The protrusion 132 of the bending portion 130 according to embodiments of the present invention is a protruding structure additionally formed in the bending portion 130 formed on the bottom portion of the battery case 120, and enables stable coupling with the cooling plate 220. The cooling plate 220 includes the groove 260 having a corresponding shape to be engaged with the protrusion 132 of the bending portion 130. Through such a structure, stable coupling between the cooling plate 220 and the battery bending portion 130 may be achieved, a contact area may be maximized, and heat transfer resistance may be minimized.

The groove 260 of the cooling plate 220 may be formed to have the same radius of curvature as that of the protrusion 132 of the bending portion 130, and precision processing with minimized dimensional tolerance may be applied so that the protrusion 132 of the bending portion 130 may be inserted. In a specific embodiment, the width of the groove 260 may be designed to be about 0.1 mm to 0.5 mm larger than the width of the protrusion 132 to facilitate assembly.

In addition, when the protrusion 132 of the bending portion 130 is inserted into the groove 260 of the cooling plate 220, a fixing structure (e.g., press-fitting coupling, screw coupling, welding coupling, etc.) may be applied in order to provide additional coupling force. In a specific embodiment, the cooling plate 220 may be made of aluminum alloy or stainless steel, and a thermally conductive adhesive having high thermal conductivity may be applied between the battery bending portion 130 and the cooling plate 220 to improve heat transfer performance.

Accordingly, the secondary battery module 200 according to embodiments of the present invention may further increase the degree of close contact between the battery and the cooling plate 220 through a structure in which the cooling plate 220 includes the groove 260 having a shape corresponding to the bending portion 130 and the protrusion 132 of the bending portion 130 is inserted into the groove 260.

In addition, consistency in an assembly process may be maintained through the precise coupling structure between the cooling plate 220 and the bending portion 130, and the mechanical fixing force between the cooling plate 220 and the battery may be increased to improve assembly stability.

The fluid path 240 of the cooling plate 220 according to embodiments of the present invention may be formed so that the radius of an inlet gradually decreases and the radius of an outlet gradually increases in order to convert the flow of the cooling fluid into turbulence flow.

According to embodiments of the present invention, the radius of the inlet is formed to gradually decrease, so that the flow rate increases when the cooling fluid is introduced. On the other hand, the radius of the outlet is formed to gradually increase, so that pressure loss is minimized when the cooling fluid is discharged and thus the fluid flow may be facilitated.

Such a structure allows the cooling fluid to be introduced at a high rate, and allows the cooling fluid to contact the surface of the cooling plate 220 in a wider area as the flow of the fluid is converted from laminar flow to turbulence flow. The structure, in which the radius of the outlet gradually increases, allows the cooling fluid to be smoothly discharged, and prevents the flow of the fluid from being irregularly changed, thereby maintaining a stable fluid flow. In a specific embodiment, the increase rate of the radius of the outlet may be set to about 10% to about 20% so that the cooling fluid may be naturally discharged.

In order to optimize the rate of change in the radius of the inlet and the radius of the outlet for the cooling fluid, the above structure may be designed by applying fluid simulation (computational fluid dynamics (CFD)), and the radius of the inlet and the radius of the outlet may be adjusted through experimental measurements.

Therefore, the secondary battery module 200 according to embodiments of the present invention may optimize the flow of the cooling fluid through the structure in which the radius of the inlet of the fluid path 240 inside the cooling plate 220 gradually decreases and the radius of the outlet gradually increases. Accordingly, the cooling fluid may be converted into turbulence flow, and heat exchange efficiency between the battery bending portion 130 and the cooling plate 220 may be further increased.

In addition, since the radius of the outlet gradually increases, the cooling fluid may be smoothly discharged, and the flow of the fluid is maintained constant, thereby improving the overall performance of the cooling system. Accordingly, the thermal management performance of the battery may be improved, and the temperature of the battery cell may be uniformly maintained.

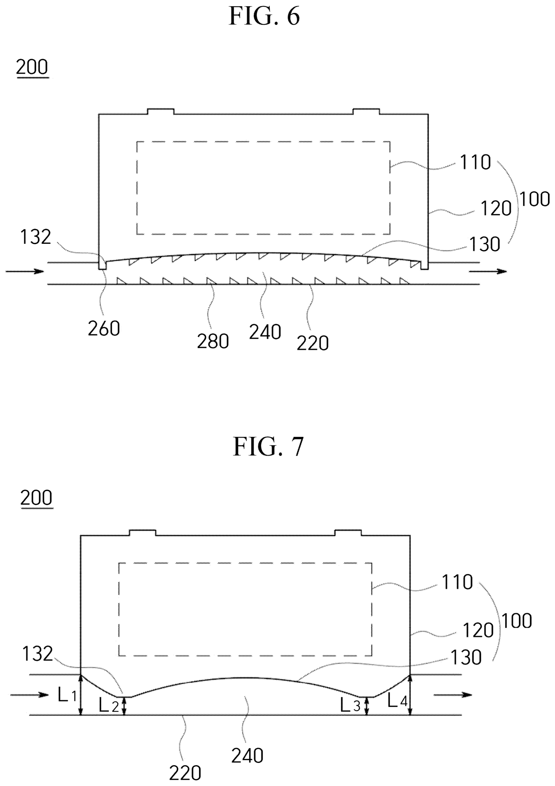

According to embodiments of the present invention, diameters of the inlet and the outlet may depend on the height of the protrusion 132 of the bending portion 130. FIG. 7 is a schematic view illustrating the secondary battery module 200 according to embodiments of the present invention, and illustrates the adjustment (L1 -> L2) of the diameter or width of the inlet and the adjustment (L3 -> L4) of the diameter or width of the outlet according to the height of the protrusion 132 of the bending portion 130.

The internal fluid path 240 of the cooling plate 220 is formed in a shape corresponding to the protrusion 132 of the bending portion 130 of the battery, and the diameters of the inlet and the outlet are adjusted so that the cooling fluid may maintain optimal flow. The protrusion 132 of the bending portion 130 is a part that comes into close contact with the cooling plate 220, and the fluid inflow and outflow rates are affected by the height of the protrusion 132.

That is, the higher the protrusion 132 of the bending portion 130, the smaller the diameters of the inlet and the outlet, and the lower the protrusion 132 of the bending portion 130, the larger the diameters of the inlet and the outlet.

Therefore, the secondary battery module 200 according to the embodiments of the present invention may adjust the diameters of the inlet and the outlet of the cooling plate 220 according to the height of the protrusion 132 of the bending portion 130 and balance an increase in pressure at the inlet and a decrease in pressure at the outlet, thereby promoting the formation of turbulence flow of the cooling fluid and thus improving cooling performance.

According to embodiments of the present invention, a plurality of ripples 280 may be formed on the sidewall of the fluid path 240 of the cooling plate 220 to disturb the flow of the cooling fluid and form turbulence flow.

The ripples may be designed to have a triangular shape, a rectangular shape, or a semicircular shape, and are arranged at regular intervals along the fluid path 240 of the cooling plate 220.

The ripples 280 prevent the cooling fluid from flowing in a simple laminar flow state, and promote turbulence flow by forming small vortices within the fluid path 240. Due to the formation of the turbulence flow, a contact area between the cooling fluid and the battery bending portion 130 increases, and as a result, heat transfer performance is improved.

The ripples 280 according to embodiments of the present invention may be arranged in a triangular shape to be perpendicular to the flow direction of the cooling fluid, and may be crosswise arranged on the upper and lower sidewalls of the fluid path 240 of the cooling plate 220.

The plurality of ripples 280 are arranged on the upper and lower sidewalls of the fluid path 240 inside the cooling plate 220, and each ripple 280 is formed in a triangular shape perpendicular to the flow direction of the cooling fluid. The triangular structure of the ripple 280 prevents the fluid from flowing in a simple laminar flow state within the fluid path 240 and disturbs the fluid flow to form turbulence flow.

In addition, the ripples 280 are crosswise arranged on the upper and lower sidewalls of the fluid path 240 of the cooling plate 220, and such a structure ensures that the cooling fluid is uniformly distributed within the fluid path 240 and the fluid flow does not stagnate in a specific area.

The cross arrangement of the ripples 280 generates a local vortex within the cooling fluid and induces turbulence flow to form more strongly. This promotes mixing of the fluid and further facilitates heat transfer between the battery bending portion 130 and the cooling fluid.

The cooling plate 220 according to embodiments of the present invention may include a multi-stage fluid path 240 structure of connecting the inlet and the outlet of the cooling fluid, and the multi-stage fluid path 240 structure may change the flow of the cooling fluid in a stepwise manner.

The multi-stage fluid path 240, through which the cooling fluid may flow, is formed inside the cooling plate 220, and is designed so that the flow of the cooling fluid is changed from the inlet to the outlet in a stepwise manner. The multi-stage fluid path 240 refers to a structure in which the fluid does not pass through the entire fluid path 240 at once, but the flow of the fluid is gradually adjusted through each stage. This allows the cooling fluid to uniformly flow along the fluid path 240 without stagnating in a specific region.

In addition, the multi-stage fluid path 240 structure is designed to correspond to the shape of the battery bending portion 130, and is arranged so that the cooling fluid may come into contact with each bending region as widely as possible within the cooling plate 220. This increases a contact area with the battery bending portion 130, thereby improving heat transfer performance.

The multi-stage fluid path 240 structure is designed not to simply move the flow of the cooling fluid linearly, but to change the flow of the cooling fluid at regular intervals in a stepwise manner. This allows the cooling fluid to flow at different rates at each stage, thereby achieving optimal heat exchange at each section.

For example, in the first stage, the cooling fluid is rapidly introduced through the inlet, and in the second stage, the flow of the cooling fluid is relaxed to allow more effective absorption of heat. From the third stage and the subsequent stage, the cooling fluid is accelerated again, and contact with the battery bending portion 130 is increased to provide optimal cooling performance. Such a multi-stage flow method prevents the cooling fluid from stagnating within the fluid path 240, and provides a uniform cooling effect over the entire battery surface.

In embodiments, a three-stage fluid path 240 structure is applied inside the cooling plate 220, wherein after the cooling fluid flows from the inlet to a first fluid path 240, turbulence flow is formed in a second fluid path 240, and the cooling fluid is finally cooled in a last third fluid path 240 and then discharged through the outlet.

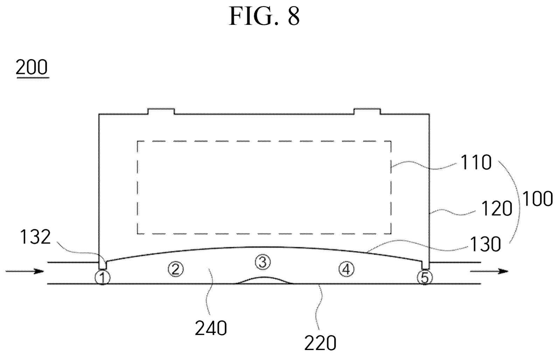

In further other embodiments, a five-stage fluid path 240 structure is applied as illustrated in FIG. 8, and the cross-sectional area of the fluid path 240 may be formed to gradually change at each stage. For example, in a first inlet ①, when the cross-sectional area of a second fluid path 240 ② is 5 mm², the cross-sectional area is reduced to 4.5 mm² in a third fluid path 240 ③ and is expanded to 5 mm² again in a fourth fluid path 240 ④, and the cooling fluid flows to a fifth outlet ⑤. This allows the cooling fluid to provide optimal heat exchange performance while changing a rate rather than simply flowing quickly.

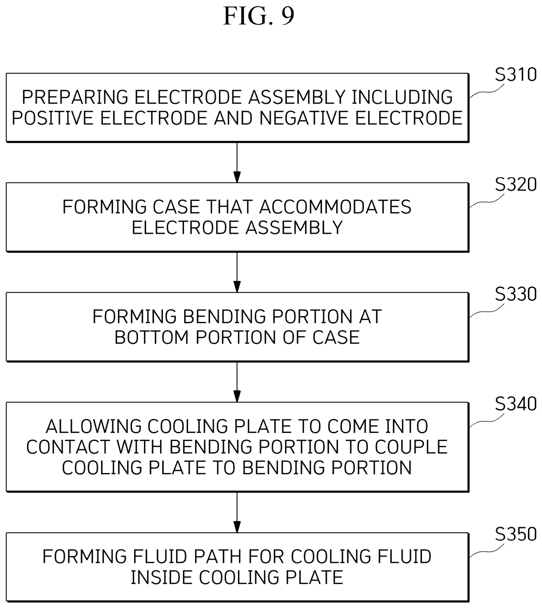

FIG. 9 is a flowchart for explaining a method for manufacturing the secondary battery module according to embodiments of the present invention.

Referring to FIG. 9, the method for manufacturing the secondary battery module according to embodiments of the present invention may include step S310 of preparing an electrode assembly including a positive electrode and a negative electrode, step S320 of molding a case that accommodates the electrode assembly, step S330 of forming a bending portion at the bottom portion of the case, step S340 of allowing a cooling plate to come into contact with the bending portion to couple the cooling plate to the bending portion, and step S350 of forming a fluid path for cooling fluid inside the cooling plate.

First, according to embodiments of the present invention, step S310 of preparing the electrode assembly including the positive electrode and the negative electrode is performed. The electrode assembly stores and releases electrical energy, the positive electrode and the negative electrode each include an active material, and the active material enables charging and discharging through an electrochemical reaction.

The positive electrode and the negative electrode each include a conductive material and a binder and are formed to secure electrical characteristics and structural stability, and a separator is interposed between the positive electrode and the negative electrode to prevent a short circuit. The electrode assembly may be implemented in shapes such as a stacked type, a winding type, and a mixed type, and in a specific embodiment, a plurality of electrode assemblies may be arranged in series or in parallel to adjust the overall output and capacity.

Subsequently, step S320 of molding the case that accommodates the electrode assembly according to embodiments of the present invention is performed. The case that accommodates the electrode assembly according to embodiments of the present invention is an external protective structure of the secondary battery, and protects the internal electrode assembly from physical impact, environmental factors, and external pressure.

The case may be made of a metal material or a polymer composite material, and is manufactured to have high strength and high heat resistance characteristics. In embodiments, aluminum, stainless steel, or a high strength composite material may be used. The case may include a case body and a cap plate that covers an opening of the case. The case accommodates an electrolyte together with the electrode assembly, and is implemented with a structure of sealing an internal space to maintain airtightness thereof.

Subsequently, step S330 of forming the bending portion on the bottom portion of the case is for improving cooling performance and distributing internal pressure. The bending portion may be formed in an inwardly concave curved shape on the bottom portion of the case, thereby increasing a contact area with the cooling plate and optimizing heat dissipation. The bending portion may be arranged at regular intervals, and in embodiments, a plurality of bending regions may be designed to maintain the same radius of curvature.

The step S330 of forming the bending portion according to embodiments of the present invention may include a press processing or deep drawing process of maintaining the radius of curvature of the bending portion constant.

The press processing is a method of molding a metal sheet into a desired shape by using a mold, and may secure the structural strength of the battery case while maintaining a precise radius of curvature. The deep drawing process is a method of forming a deep curve by stretching a metal sheet, and may manufacture a bending portion having a uniform radius of curvature.

Subsequently, the step S340 of allowing the cooling plate to come into contact with the bending portion according to embodiments of the present invention to couple the cooling plate to the bending portion is performed. The cooling plate may come into contact with the bending portion of the battery case so that heat exchange may be smoothly performed, and the cooling plate has a shape with the same radius of curvature as that of the bending portion, and is processed to be in close contact with the bending portion.

The cooling plate may be made of aluminum alloy or copper alloy, and may include an internal fluid path in order to maximize cooling efficiency. In addition, the cooling plate may be coupled in such a way that the protrusion of the bending portion is inserted into the groove of the cooling plate so as to be stably mounted in the secondary battery module.

According to embodiments of the present invention, the protrusion may be formed in the step of forming the bending portion. In the step of allowing the cooling plate to come into contact with the bending portion to couple the cooling plate to the bending portion, the groove corresponding to the protrusion may be formed in the cooling plate, and the protrusion may be inserted into the groove, so that the cooling plate may come into contact with the bending portion to be coupled to the bending portion.

That is, the protrusion is additionally formed in the step of forming the bending portion, and in the step of allowing the cooling plate to come into contact with the bending portion to couple the cooling plate to the bending portion, the groove corresponding to the protrusion is formed in the cooling plate and the protrusion is inserted into the groove, so that the cooling plate comes into contact with the bending portion to be coupled to the bending portion. This allows for precise engagement of the cooling plate and the bending portion, thereby optimizing a contact area with the cooling plate.

Subsequently, step S350 of forming the fluid path for cooling fluid inside the cooling plate according to embodiments of the present invention is performed. The fluid path inside the cooling plate may be formed so that the cooling fluid may flow, and the cooling fluid may effectively remove heat of the battery by maximizing a contact area with the bending portion.

The fluid path may be formed in a multi-stage structure, and is designed so that the fluid introduced through the inlet may flow along the fluid path while forming turbulence flow. To this end, the fluid path may be processed so that the diameter of the inlet gradually decreases and the diameter of the outlet gradually increases. In addition, a plurality of ripples may be formed inside the fluid path to disturb the flow of the cooling fluid, thereby inducing turbulence flow and maximizing cooling performance. Such ripples may be processed into a triangular shape to be perpendicular to the flow direction of the cooling fluid, and formed to be crosswise arranged on the upper and lower sidewalls of the fluid path of the cooling plate.

The method for manufacturing a secondary battery module according to embodiments of the present invention described above has been described with reference to the flowchart presented in the drawing. For simplicity, the method has been illustrated and described as a series of blocks, but the present invention is not limited to the order of the blocks, and some blocks may occur in a different order or simultaneously with other blocks illustrated and described in the present specification, and various other branches, flow paths, and orders of blocks that achieve the same or similar results may be implemented. In addition, all the illustrated blocks may not be required for implementing the method described in the present specification.

In the description with reference to FIG. 9, each step may be further divided into additional steps or combined into fewer steps, depending on the implementation example of the present invention. In addition, some steps may be omitted as needed, and the order between the steps may be changed. In addition, even in the case of other omitted content, the content of FIGS. 1 to 8 may be applied to the content of FIG. 9. In addition, the content of FIG. 9 may be applied to the content of FIG. 1 to FIG. 8.

Hereinafter, materials which may be used in a secondary battery according to an embodiment of the present invention are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0. 90≤a≤1.8, 0≤b≤0.5, 0≤c≤0.05); LiₐMn_{2-b}X_{b}O_{4-c}D_{c} (0. 90≤a≤1.8, 0≤b≤0.5, 0≤c≤0.05) ; LiₐNi_{1-b-c}Co_{b}X_{c}O_{2-α}D_{α} (0. 90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0. 90≤a≤1.8, 0≤b≤0.9, 0≤c≤0.5, 0≤d≤0.5, 0≤e≤0.1); LiₐNiG_{b}O₂ (0. 90≤a≤1.8, 0.001≤b≤0.1); LiₐCoG_{b}O₂ (0. 90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present invention may not be limited thereto.

A negative electrode active material may include a material capable of reversibly Intercalation/deintercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present invention is not limited thereto.

The organic matter and the inorganic matter may have a form in which the organic matter and the inorganic matter have been mixed in one coating layer or a form in which a coating layer including the organic matter and a coating layer including the inorganic matter have been stacked.

FIG. 9 is an exemplary diagram of a secondary battery module in which the secondary batteries illustrated in FIGS. 1 to 7 have been arranged according to an embodiment of the present invention. The secondary battery module may be manufactured by arranging and connecting multiple secondary battery cells laterally and/or longitudinally as the capacity of a secondary battery for driving an electric vehicle is increased.

Multiple secondary batteries may be arranged in a space that is formed by a pair of end plates 71a and 71b that face each other and a pair of side plates 72a and 72b that face each other. A direction in which the secondary batteries are arranged and the number of secondary batteries may be designed so that desired voltage and current specifications are obtained.

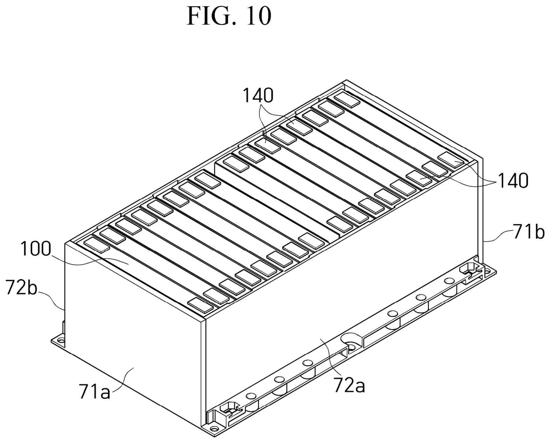

FIG. 10 is an exemplary diagram of a secondary battery pack 80 that has been constructed to apply the secondary battery module illustrated in FIG. 9 to an actual product (e.g., a vehicle).

The secondary battery pack may be manufactured by embedding multiple secondary battery modules in a pack housing having a form designed to mount the secondary battery pack on an actual product. The pack housing may include a fastening part that is necessary for the mounting of the secondary battery pack on the product and an electricity withdrawing part. Related elements, such as a bus bar for an electrical connection of secondary batteries, a cooling unit, and an external terminal, are not illustrated in FIG. 10, for convenience sake.

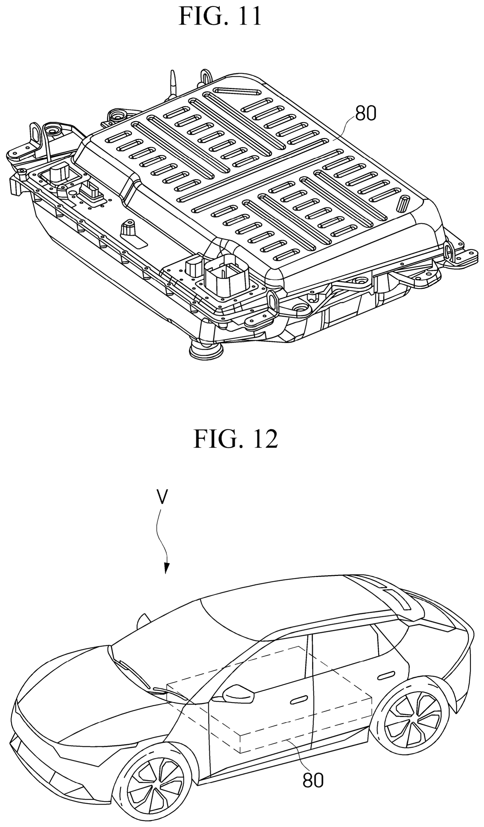

The secondary battery pack may be mounted on a vehicle. The vehicle may be an electric vehicle, a hybrid vehicle, or a plug-in hybrid vehicle, for example. The vehicle may include a four-wheel or two-wheel drive vehicle. FIG. 11 is a diagram for describing a vehicle including the secondary battery pack illustrated in FIG. 10. FIG. 11 illustrates that the secondary battery pack 80 according to an embodiment of the present invention has been mounted on a lower part of the vehicle body of a vehicle V. The vehicle V may operate by being supplied with power from the secondary battery pack 80 according to an embodiment of the present invention.

Although the present invention has been described above in connection with the limited embodiments and drawings, the present invention is not limited to the embodiments. A person having ordinary knowledge in the art to which the present invention pertains may modify and change the present invention within the technical spirit of the present invention and the equivalent range of the following claims.

### [Description of reference numerals]

| | | | |
|---|---|---|---|
| 100: | secondary battery | 110: | electrode assembly |
| 120: | case | 130: | bending portion |
| 132: | protrusion | 200: | secondary battery module |
| 220: | cooling plate | 240: | fluid path |
| 260: | groove | 280: | ripple |

## Claims

1. A secondary battery (100) comprising:
an electrode assembly (110) including a positive electrode and a negative electrode;
a case (120) configured to accommodate the electrode assembly (110); and
a bending portion (130) formed on a bottom portion of the case (120).

2. The secondary battery (100) as claimed in claim 1, wherein the bending portion (130) is formed in a concave curved shape in an inward direction of the case (120).

3. The secondary battery as claimed in claim 1 or 2, wherein the bending portion (130) is formed in a symmetrical shape based on a center line of the bottom portion of the case (120).

4. The secondary battery (100) as claimed in any one of claims 1 to 3, wherein the bending portion (130) includes a plurality of bending regions, and the bending regions are continuously arranged at regular intervals along the bottom portion of the case (120).

5. The secondary battery (100) as claimed in claim 4, wherein the bending regions have the same radius of curvature, and are formed in a uniform pattern along the bottom portion of the case (120).

6. A secondary battery module (200) comprising:
a secondary battery (100) including an electrode assembly (110) including a positive electrode and a negative electrode, a case (120) configured to accommodate the electrode assembly (110), and a bending portion (130) formed on a bottom portion of the case (120); and
a cooling plate (220) configured to come into contact with the bending portion (130) of the secondary battery (100).

7. The secondary battery module (200) as claimed in claim 6, wherein the cooling plate (220) has a radius of curvature equal to a radius of curvature of the bending portion (130), and is formed to be in close contact with the bending portion (130).

8. The secondary battery module (200) as claimed in claim 6 or 7, wherein the cooling plate (220) is provided therein with a fluid path (240) through which a cooling fluid flows, and the fluid path (240) is continuously formed along the bending portion (130).

9. The secondary battery module (200) as claimed in claim 8, wherein the cooling plate (220) includes a groove (260) having a shape corresponding to the bending portion (130), and
a protrusion (132) of the bending portion (130) is inserted into the groove (260) and coupled thereto.

10. The secondary battery module (200) as claimed in claim 9, wherein the fluid path (240) of the cooling plate (220) is formed so that a radius of an inlet gradually decreases and a radius of an outlet gradually increases in order to convert flow of the cooling fluid into turbulence flow.

11. The secondary battery module (200) as claimed in claim 10, wherein diameters of the inlet and the outlet depend on a height of the protrusion (132) of the bending portion (130).

12. The secondary battery module (200) as claimed in any one of claims 8 to 11, wherein a plurality of ripples (280) are formed on a sidewall of the fluid path (240) of the cooling plate (220) to disturb a flow of the cooling fluid and form turbulence flow.

13. The secondary battery module (200) as claimed in claim 12, wherein the ripples (280) are arranged in a triangular shape to be perpendicular to a flow direction of the cooling fluid, and are crosswise arranged on upper and lower sidewalls of the fluid path (240) of the cooling plate (220).

14. The secondary battery module (200) as claimed in any one of claims 8 to 13, wherein the cooling plate (220) includes a multi-stage fluid path (240) structure of connecting an inlet and an outlet of the cooling fluid, and
the multi-stage fluid path (240) structure changes a flow of the cooling fluid in a stepwise manner.

15. A method for manufacturing a secondary battery module (200), the method comprising:
preparing an electrode assembly (110) including a positive electrode and a negative electrode;
molding a case (120) that accommodates the electrode assembly (110);
forming a bending portion (130) at a bottom portion of the case (120);
allowing a cooling plate (220) to come into contact with the bending portion (130) to couple the cooling plate (220) to the bending portion (130); and
forming a fluid path (240) for cooling fluid inside the cooling plate (220).
